(19) Europäisches Patentamt / European Patent Office / Office européen des brevets

(11) **EP 3 043 947 B1**

(12) **EUROPÄISCHE PATENTSCHRIFT**

(45) Veröffentlichungstag und Bekanntmachung des Hinweises auf die Patenterteilung:
**19.05.2021 Patentblatt 2021/20**

(21) Anmeldenummer: **14771194.9**

(22) Anmeldetag: **04.09.2014**

(51) Int Cl.:
**B23F 5/16** *(2006.01)* **B23F 23/12** *(2006.01)*
**B23Q 17/22** *(2006.01)*

(86) Internationale Anmeldenummer:
**PCT/EP2014/002394**

(87) Internationale Veröffentlichungsnummer:
**WO 2015/036104 (19.03.2015 Gazette 2015/11)**

(54) **MESSGEOMETRIE, MESSEINRICHTUNG MIT EINER SOLCHEN MESSGEOMETRIE UND MESSVERFAHREN**

MEASURING GEOMETRY, MEASURING DEVICE COMPRISING SAID TYPE OF MEASURING GEOMETRY AND MEASURING METHOD

GÉOMÉTRIE DE MESURE, DISPOSITIF DE MESURE PRÉSENTANT UNE TELLE GÉOMÉTRIE DE MESURE ET PROCÉDÉ DE MESURE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2013 DE 102013015253**

(43) Veröffentlichungstag der Anmeldung:
**20.07.2016 Patentblatt 2016/29**

(73) Patentinhaber: **Gleason-Pfauter Maschinenfabrik GmbH**
**71636 Ludwigsburg (DE)**

(72) Erfinder:
• **KRESCHEL, Jürgen**
**71282 Hemmingen (DE)**
• **WEPPELMANN, Edgar**
**71679 Asperg (DE)**

(74) Vertreter: **Leinweber & Zimmermann**
**Patentanwalts-PartG mbB**
**European Patent Attorneys**
**Viktualienmarkt 8**
**80331 München (DE)**

(56) Entgegenhaltungen:
**EP-A1- 2 537 615     DE-U1- 20 203 661**
**JP-B- H07 102 483     US-A- 2 679 109**
**US-A- 5 271 271**

EP 3 043 947 B1

## Beschreibung

Die Erfindung betrifft primär eine Meßgeometrie für ein verzahntes, zum Wälzschälen von Werkstückverzahnungen ausgelegtes Werkzeug zur Bestimmung wenigstens einer Meßgröße, welche für einen mit dem Werkzeug durchzuführenden Schälprozeß verwendbar ist, in einer Phase dessen das Profil der zu erzeugenden Werkstückverzahnung in Verzahnungseingriff mit der Werkzeugverzahnung gebildet wird, eine eine solche Meßgeometrie aufweisende Meßeinrichtung sowie ein auf einer solchen Meßgeometrie beruhendes Meßverfahren. Allgemeiner betrifft die Erfindung Meßgeometrien für Werkzeuge mit geometrisch bestimmten Schneiden, die zur wälzenden Erzeugung und/oder Bearbeitung von Verzahnungen ausgelegt sind, und stellt solche unter Schutz.

Beim Wälzschälen von verzahnten Werkstücken mit dafür ausgelegten Schälrädern für das Wälzschälen (Power Skiving) werden von den Herstellern dieser Schälrädern die Dimensionen des Schälräds angegeben, welche direkt oder indirekt in Steuervorgaben für das Wälzschälverfahren einfließen.

Typischerweise wird von den Herstellern dabei der Außendurchmesser des Schälrads (gemessen am Kopf der Zähne) angegeben, sowie die Höhe des Werkzeugs.

Andere Meßverfahren, die etwa bei der Kontaktmessung beim Wälzstoßen verwendet werden, wie etwa eine Vermessung des Stoßrads z. B. mit einer definierten Rolle und daraus errechneter Dimensionen des Werkzeugs, stehen für Schälräder nur bedingt zur Verfügung, da die Auswertung derartiger Messungen äußerst komplex ist und viele Eingaben notwendig machen.

Denn während die Schneidkante des Stoßrads entlang seiner Achse betrachtet die Geometrie einer Verzahnung eines geradeverzahnten Zahnrads in Stirnschnitt darstellt, welches sich bei der Bearbeitung des Werkstücks mit diesem in Eingriff befindet wie ein Zahnrad mit dem anderen (geradeverzahntes Stoßrad), oder bei schrägverzahnten Stoßrädern wenigstens die Kontur der Schneidkante senkrecht zur normalen und entlang der Flankenlinie betrachtet die Geometrie einer Verzahnung eines schrägverzahnten Zahnrads in Normalschnitt darstellt, welches sich bei der Bearbeitung des Werkstücks mit diesem in Eingriff befindet wie ein schrägverzahntes Zahnrad mit einem anderen, weicht die Schneidkante eines Schälrads in ihrer Form von der Form der zu erzielenden Lücke einer bestimmten Verzahnungsgeometrie ab. Da beim Wälzschälen ein von Null verschiedener, üblicherweise im Bereich von 10 bis 30 Grad eingestellter Achskreuzwinkel zwischen den Rotationsachsen von Werkstück und Werkzeug besteht, entspricht ein Schälrad z. B. nicht mehr einer evolventischen Verzahnung, wie das bei Stoßrädern der Fall ist. Auf Einzelheiten des dem Fachmann bekannten Power Skiving-Verfahrens wird hier nicht weiter eingegangen, eine anschauliche Darstellung des Verfahrens findet sich in EP 2 537 615 A1.

Aus diesem Grund stellen die Schälradhersteller üblicherweise nur die oben genannten Informationen über den Außendurchmesser und die Höhe bereit. Allerdings hat es sich herausgestellt, daß es trotz der Kenntnis dieser Dimensionen des Schälrads insbesondere zu Beginn der Fertigung einer Serie von Werkstückverzahnungen zu einer Produktion von Ausschußteilen kommen kann, da die Werkstückverzahnungen unter diversen Aspekten, beispielsweise einer Zahnweite im Untermaß, nicht mehr innerhalb der vorgegebenen Toleranzen liegen. In der Praxis werden die Werkstücke in einen Meßraum verbracht, dort vermessen und anhand den bei der Vermessung des Werkstücks erhaltenen Meßergebnissen die Maschineneinstellungen des Wälzschälverfahrens korrigiert.

JPH07102483 B1, die Basis für den Oberbegriff des Anspruchs 1 bildend, offenbart eine Achsabstandsbestimmung zwischen einem Masterzahrad und einem Wälzfräser zur Einstellung des Fräsprozesses von Zahnrädern zum Erreichen korrekter Zahndicken.

Aufgrund dieser Probleme liegt der Erfindung die Aufgabe zugrunde, eine Durchführung von Wälzschälverfahren diesbezüglich zu vereinfachen und dieses insbesondere hinsichtlich einer hohen Qualität der hergestellten Werkstückverzahnungen insbesondere möglichst schon beim ersten Werkstück einer Serie zu verbessern.

Dieses Problem wird von der Erfindung durch die Bereitstellung einer Meßgeometrie mit den Merkmalen von Anspruch 1 gelöst.

Die Meßgeometrie ist also so ausgelegt, daß diese Übereinstimmung in den Verzahnungseingriffen besteht, sobald die Werkzeugverzahnung vor der (Ver-) Messung in Eingriff mit der Meßgeometrie gebracht wird.

Im Folgenden wir die Erfindung in der Beschreibung der Einfachheit halber mit Bezug auf das Wälzschälen beschrieben, bei dem die Vorteile der Erfindung besonders zur Geltung kommen, auch wenn sie durchaus auch für die in den Ansprüchen angegebenen Wälzverfahren Anwendung finden kann, insbesondere für Stoßräder mit Schrägverzahnung.

Aufgrund des Verzahnungseingriffs zwischen Schälrad und dem Verzahnungsbereich der Meßgeometrie entsprechend dem Verzahnungseingriff zwischen Werkstück und Werkzeug in der profilbildenden Phase, wird eine den minimalen Achsabstand zwischen Werkstück und Schälrad nachbildende Situation geschaffen, da in der profilbildenden Phase eben dieser minimale Achsabstand zwischen Schälrad und Werkstück besteht. Dies läßt sich bildlich dadurch veranschaulichen, daß man sich zur Meßgeometrie die zum entsprechenden Werkstück zugehörige Achse dazu denkt.

Insbesondere gelingt dadurch über die Bestimmung des tatsächlichen minimalen Achsabstands, also dem minimalen Achsabstand zwischen Werkzeugachse und Werkstückachse im profilbildenden letzten Schritt, die Bestimmung der geeigneten Dimension der zur Eingabe der Maschineneinstellungen des Wälzschälverfahrens angeforderten Parameter. Denn allein aus dem bislang gemessenen und zur Verfügung gestellten Außendurchmesser des Schälrads läßt sich auf diesen Achsabstand in der Regel kein eindeutiger Rückschluß ziehen, eingedenk der komplexen Kontaktsituation zwischen dem Schälrad und dem Werkstück während der profilbildenden Wälzbewegung beim Wälzschälen.

In einer besonders bevorzugten Ausführungsform der Erfindung bildet der Verzahnungsbereich der Meßgeometrie wenigstens einen Abschnitt der Zahnflanken der Werkstückverzahnung ab. Die Herstellung einer solchen Meßgeometrie ist darüber hinaus einfach, da die Kontur des Werkstücks ohnehin üblicherweise vorgegeben ist, beispielsweise durch Vorgaben des zukünftigen Nutzers der herzustellenden Werkstückverzahnungen.

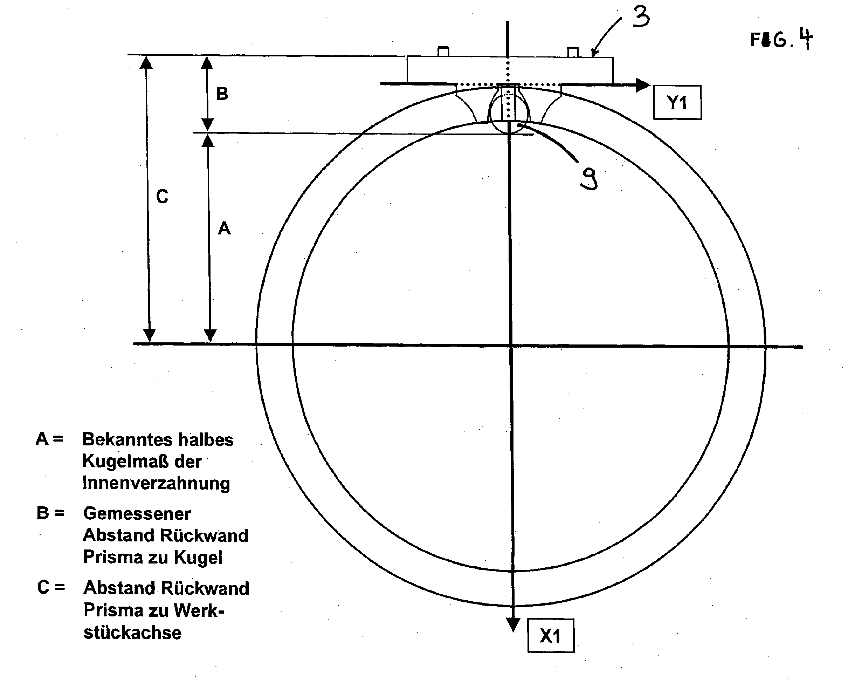

In diesem Zusammenhang ist bevorzugt vorgesehen, daß die wenigstens abschnittsweise Abbildung wenigstens eine Links- und einer Rechtsflanke der Werkstückverzahnung umfaßt. Zweckmäßig für eine einfache Messung (insbesondere des Maßes "B" nach Fig. 4) ist, wenn die wenigstens abschnittsweise Abbildung zwei einander zugewandte, insbesondere zu einer Lücke gehörigen Zahnflanken umfaßt oder aber auch zwei voneinander abgewandte Zahnflanken separater Zähne. Bevorzugt wird zudem, wenn die wenigstens abschnittsweise Abbildung alle vier Zahnflanken zweier aufeinander folgender Zähne umfaßt, insbesondere genau diese vier Zahnflanken. Die wenigstens abschnittsweise Abbildung kann jedoch auch asymmetrisch verteilte Flanken aufweisen, solange sich diese in der profilbildenden Zone der Wälzbewegung befinden. Man könnte beispielsweise auch zwei Zähne heranziehen, die einen oder auch mehrere Zähne Abstand voneinander haben. Bereits wenn die wenigstens abschnittsweise Abbildung die Zahnflanken eines Zahns umfaßt, oder zwei, drei oder mehr Zahnflanken, von denen eine Rechts- und eine Linkszahnflanke enthalten ist, können vorteilhafte Ergebnisse erreicht werden. Diesbezüglich ist die Erfindung nicht weitergehend eingeschränkt.

In einer zweckmäßigen Ausgestaltung kann die Meßgeometrie eine Basis aufweisen, die an einer Seite den Verzahnungsbereich aufweist. An der anderen Seite (Rückseite) wird eine planare Ausbildung bevorzugt, im Hinblick auf eine einfache Einbettung der Meßgeometrie in eine Meßeinrichtung, aber auch zur Bildung einer meßgeometrieseitigen Referenz für durchzuführende Messungen. Basis und Verzahnungsbereich können dabei insbesondere einstückig ausgeführt werden.

So ist in einer besonders bevorzugten Ausführungsform der Erfindung vorgesehen, daß eine Meßgröße eine Information über den Abstand zwischen der Rotationsachse des Werkzeugs (Schälrads) und einer ersten, meßgeometrieseitigen Referenz beinhaltet, wobei diese erste Referenz beispielsweise die Rückseite der Basis sein kann. Diese Information erlaubt ohne Weiteres die Bestimmung des Achsabstands bei zusätzlicher, leicht zu beschaffender Kenntnis des Abstands dieser Referenz von der Werkstückachse der, wie oben erläutert, gedanklich aus der Meßgeometrie abstrahierten Werkstückverzahnung, siehe auch die Erläuterungen unten zu den Verfahrensansprüchen.

Erfindungsgemäß ist bei der Meßgeometrie ein an der Seite des Verzahnungbereichs vorragendes Positionierelement vorgesehen, das eine Erstreckungskomponente in Zahnhöhenrichtung der Zähne des Verzahnungsbereichs aufweist. Insbesondere ist das Positionierelement stiftartig ausgebildet und kann bevorzugt mit seiner Stiftachse orthogonal zur Rückseite der Basis angeordnet sein. Dieses Positionierelement dient zur Anlage an der Schneidkante des Zahnkopfes des Werkzeugs, insbesondere an dessen Außendurchmesser, im Verzahnungseingriff. Durch den dadurch vorgegebenen Kontakt zwischen Positionierelement und der Schneidkante des Schälrads gelingt die Bereitstellung weiterer vorteilhafter Meßinformationen.

So ist vorgesehen, daß eine Meßgröße eine Information über den Höhenabstand zwischen der Anlage des Positionierelements und einer zweiten, werkzeugseitigen Referenz beinhaltet. Diese kann beispielsweise die Rückseite des Schälrads oder auch beispielsweise die Rückseite einer das Werkzeug aufnehmenden Halterung sein, beispielsweise einer Aufspannvorrichtung für das Schälrad. Wohin genau man die werkzeugseitige Referenz legt, ist von untergeordneter Bedeutung, es sollte lediglich in möglichst einfacher Weise eine Umrechnung auf die für die Maschineneinstellung geforderte Höheninformation bestimmbar sein. Aus diesem Grund bieten sich die genannten Beispiele durchaus an.

Denn es ist erkannt worden, daß die Höhe des Werkzeugs von einem Punkt auf der Schneidkante am Außendurchmesser des Schälrads bis zu seiner Rückseite häufig nicht direkt gemessen werden kann, da die Zahnmittenlinie, welche die Schneidkante am Zahnkopf schneidet, sich weder auf optischen oder mechanischen Meßgeräten leicht ermitteln und definieren läßt. Damit fehlt ohne die erfindungsgemäße Messung beim Schälprozeß der genaue Bezug darauf, von welchem Punkt am Zahnkopf die Höhe des Schälrads zu seiner Rückseite zu betrachten ist, insbesondere auch deshalb, weil dem Anwender des Schälrads auf der Schälmaschine in der gegenwärtigen Situation die Hintergründe, wie die Zahnhöhe ermittelt wurde, nicht bekannt sind.

Im Rahmen der Erfindung wurde nämlich auch festgestellt, daß der bislang vermessene und zur Verfügung gestellte Wert der eingangs erläuterten Höhe des Werkzeugs nicht für einen eindeutigen Rückschluß ausreicht, welche für die Maschineneinstellungen wirklich relevante Werkzeughöhe gegeben ist, nämlich der axiale Abstand des Punkts, der auf der Schneidkante und auf dem Außendurchmesser des Schälrads liegt, etwa zur Rückseite des Schälrads. In diesem Zusammenhang ist es auch zweckmäßig, den Positionierstift bezüglich der Zahnweitenrichtung mittig zwischen beiden Zähnen des Verzahnungsbereichs der Meßgeometrie anzuordnen. Von Bedeutung ist an dieser Stelle wiederum zunächst die Herstellung eines eindeutigen Kontaktpunkts mit der Schneidkante, aus der sich die geforderte Information für die Maschineneinstellungen dann bestimmen läßt. Der Fachmann erkennt hier ohne Weiteres, daß dies auch bei einem Treppenschliff des Schälrads erreichbar ist. Im Querschnitt sollte das Positionierelement bevorzugt eine Krümmung aufweisen, insbesondere kann ein stiftartiges Positionierelement mit kreisförmigem Querschnitt gewählt werden.

Des Weiteren sieht die Erfindung vor, daß eine Meßgröße eine Information über die Winkellage der Anlage des Positionierelements und einer dritten, werkzeugseitigen azimutalen Referenz beinhaltet, die beispielsweise eine drehsymmetriebrechende Geometrie des Werkzeugs sein kann, beispielsweise eine Nut auf der Rückseite des Schälrads. Dies kann beim Power Skiving von Bedeutung sein, wenn die Verzahnung in einem bestimmten Lagebezug zu einer anderen Verzahnung oder Geometrie am Werkstück erzeugt/positioniert werden soll. Beispielsweise kommt es bei unter herkömmlichen Informationen durchgeführten Wälzschälverfahren vor, daß es trotz ausreichender Toleranz hinsichtlich Verzahnungsqualität und Zahnweite zu Ausschußteilen aufgrund einer fehlerhaften Lagebeziehung der im Wälzschälen erzeugten Verzahnung zu einer bereits am Werkstück vorhandenen weiteren Verzahnung kommt. Dieses Problem läßt sich aufgrund der erfindungsgemäß bestimmten Winkellage lösen. Wiederum kommt es auf die speziell gewählte azimutale Referenz bei der Messung selbst nicht an, es muß daraus lediglich die letztlich interessante relative Winkellage ableitbar sein. So könnte beispielsweise als azimutale Referenz auch eine Geometrie auf der Rückseite des Schälradhalters, auf dem das Schälrad montiert ist, herangezogen und diesbezüglich gemessen werden.

Es wird bevorzugt, daß sowohl die Meßgröße zur Bestimmung des minimalen Achsabstands als auch die Meßgröße zur Bestimmung der relevanten Werkzeughöhe bestimmt werden, sofern es auf die Lage der zu erzeugenden Werkstückverzahnung ankommt, bevorzugt zusätzlich auch diese Meßgröße als dritte Meßgröße.

Eine erfindungsgemäße Meßeinrichtung zeichnet sich durch eine Meßgeometrie nach einem oder mehreren der oben erläuterten Aspekte aus sowie durch eine Halterung für das zum Wälzschälen ausgelegte Werkzeug (Schälrad), wobei die räumliche Lage zwischen Meßgeometrie und Halterung veränderbar ist.

So soll die Meßeinrichtung bevorzugt eine Drehung der Halterung um eine Drehachse erlauben. Wie üblich ist es von Vorteil, wenn die Rotationsachse des Schälrads mit dieser Drehachse zusammenfällt. Zur Vereinfachung der oben erläuterten Messung der Winkellage ist bevorzugt ein Drehgeber für die Drehachse vorgesehen. Durch die Drehachse ist es nicht mehr erforderlich, das Schälrad in genau der für den Verzahnungseingriff mit der Meßgeometrie erforderlichen Drehlage aufzuspannen.

In einer besonders bevorzugten Ausgestaltung der Meßeinrichtung ist ein radialer Abstand zwischen Werkzeug und Meßgeometrie änderbar, insbesondere entlang einer ersten Linearbewegungsachse. Dies erlaubt eine Herstellung des Verzahnungseingriffs in einer einfach zu bewerkstelligenden Weise.

Zur einfachen Erstellung des Kontakts zwischen dem Positionierelement und dem Schälrad ist bevorzugt die Positionierung der Meßgeometrie bezüglich der Richtung der Werkzeugachse einstellbar, bevorzugt entlang einer zweiten Linearbewegungsachse Zweckmäßig kann diese parallel zur Drehachse verlaufen.

Sind sämtliche der vorstehend genannten Achsen verwirklicht, läßt sich der Verzahnungseingriff des Schälrads mit der Meßgeometrie besonders einfach dadurch herstellen, daß zunächst das Schälrad um die Drehachse drehbar positioniert wird, bei noch ausreichendem Abstand von Positionierstift und Schälrad die Radialbewegung ausgeführt wird, wobei rechtzeitig vor Eingriff die Drehlage für ein kollisionsfreies radiales Eintauchen des Schälrads in die Meßgeometrie eingestellt wird, und im letzten Schritt durch Bewegung entlang der zweiten Linearbewegungsachse der Kontakt zwischen dem Positionierstift und der Schneidkante des Schälrads hergestellt wird. Die dazu erforderlichen Bewegungen können von Hand, von Hand geführt, aber motorisch unterstützt, oder auch motorisch erfolgen.

Zweckmäßig weist die Meßeinrichtung auch eine Steuereinrichtung auf, über die die Ermittlung und/oder Abspeicherung der Meßinformationen in der für Meßeinrichtungen üblichen Weise vonstatten geht. Als Meßachsen kommen hierbei die beiden Linearbewegungsachsen sowie die Drehachse in Frage, je nach gewünschter Bereitstellung der oben genannten Meßgrößen.

Gemäß einem weitergehenden Aspekt der Erfindung soll die das Schälrad unmittelbar haltende Halterung von der Meßeinrichtung abnehmbar und zusammen mit dem gehaltenen Werkzeug auf eine Wälzschälmaschine aufbringbar sein. Da somit die Aufspannung des Schälrads zwischen der Messung in der Meßeinrichtung und dem Wälzschälprozeß nicht mehr verändert wird, werden auch minimale aufspannungsbedingte Fehler ausgeschlossen und ein nochmals präziseres Ergebnis erreicht.

Vorrichtungstechnisch stellt die Erfindung weitergehend auch eine Wälzschälmaschine unter Schutz, deren Steuerung die Wälzschälmaschine zur Durchführung eines Wälzschälverfahrens in Abhängigkeit wenigstens einer mit einer erfindungsgemäßen Meßeinrichtung bestimmten Meßgröße steuert, sowie auch eine Anlage, die eine erfindungsgemäße Meßeinrichtung mit einer Wälzschälmaschine kombiniert. Bevorzugt können dabei Meßeinrichtung und Wälzschälmaschine austauschbare Werkzeughalterungen aufweisen, und/oder gekoppelte oder vereinte Steuerungen.

In verfahrenstechnischer Hinsicht wird die der Erfindung zugrunde liegende Aufgabe gelöst durch ein Meßverfahren mit den Merkmalen des Anspruchs 9.

Die Vorteile des erfindungsgemäßen Meßverfahrens ergen sich aus den oben erläuterten Vorteilen der erfindungsgemäßen Meßgeometrie und Meßeinrichtung.

So kann die wenigstens eine Meßgröße eine Information über den Abstand zwischen der Rotationsachse des Werkzeugs und einer ersten, meßgeometrieseitigen Referenz beinhalten. Aus dieser Abstandsinformation kann der (minimale) Achsabstand, also der Achsabstand zwischen den Rotationsachsen von Werkzeug und Werkstück in der profilbildenden Phase ermittelt werden. Dazu kann eine andere Meßgeometrie, beispielsweise eine Rolle oder eine Kugel, bezüglich der das z. B. Kugelmaß des Werkstücks bekannt oder jedenfalls bestimmbar ist, in Eingriff mit der Zahnlücke der Meßgeometrie gebracht werden und daraus eine Abstandsinformation z. B. der Kugel zur ersten meßgeometrieseitigen Referenz bestimmt werden. Der minimale Achsabstand ergibt sich dann durch Differenzbildung aus der Summe des halben Kugelmaßes und dem Abstand zwischen Kugel und erster Referenz und dem Abstand der Werkzeug- (Schälrad-)achse von der ersten Referenz. Es ist somit deutlich, daß es zur Bestimmung des minimalen Achsabstands nicht auf die genaue Lage der ersten Referenz ankommt.

Des Weiteren kann die wenigstens eine Meßinformation eine Höhenlage einer mittels eines Positionierelements bestimmten Anlage des Positionierelements an der Schneidkante des Zahnkopfs des Werkzeugs, insbesondere an dessen Außendurchmesser, gegenüber einer werkzeugseitigen zweiten Referenz und/oder eine Winkellage dieser Anlage gegenüber einer werkzeugseitigen dritten Referenz betreffen, wie oben bereits erläutert.

Im Weiteren stellt die Erfindung unter Gesichtspunkten des Verfahrens auch ein Wälzschälverfahren unter Schutz, das unter einem von einer mit einem Meßverfahren der genannten Aspekte bestimmten Meßinformation abhängigen Steuerbefehl durchgeführt wird. Bei diesem Wälzschälverfahren kann vorgesehen werden, daß eine Aufspannung des Werkzeugs (Schälrads) auf seiner (unmittelbaren) Halterung zwischen dem Meßverfahren und dem Wälzschälverfahren nicht mehr gelöst wird.

Weitere Merkmale, Einzelheiten und Vorteile der Erfindung ergeben sich aus den nachfolgenden Beschreibungen mit Bezug auf die beiliegenden Figuren, von denen

| | |
|---|---|
| Fig. 1 | eine Meßgeometrie in einer perspektivischen Ansicht zeigt, |
| Fig. 2 | diese Meßgeometrie in einer Seitenansicht zeigt, |
| Fig. 3 | diese Meßgeometrie in einer weiteren Seitenansicht zeigt, |
| Fig. 4 | den Abstand einer Werkstückachse von einer Referenz anhand der Meßgeometrie von Fig. 1 verdeutlicht, |
| Fig. 5 | den Abstand einer Werkzeugachse von der Referenz mit Bezug auf Fig. 4 verdeutlicht, |
| die Figuren 6 bis 8 | die Anordnung der Meßgeometrie bezüglich einer Bewegungsachse einer Meßeinrichtung veranschaulichen, |
| Fig. 9 | den Verzahnungseingriff zwischen Werkzeug und Meßgeometrie veranschaulicht, |
| Fig. 10 | eine Meßeinrichtung mit der Meßgeometrie in einer perspektivischen Ansicht zeigt, |
| die Figuren 11 und 12 | diese Meßeinrichtung in Seitenansichten zeigen, |
| Fig. 13 | eine vergrößerte Darstellung eines Ausschnitts aus Fig. 12 zeigt, |
| Fig. 14 | eine Aufsicht auf die Meßeinrichtung aus Fig. 10 von oben zeigt, und |
| Die Figuren 15 - 18 | eine mögliche Montage illustrieren. |

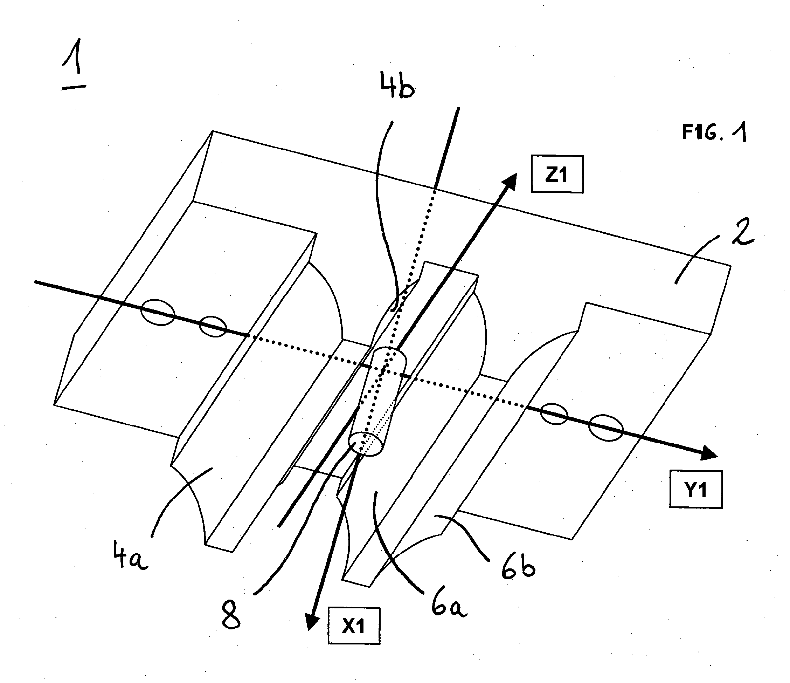

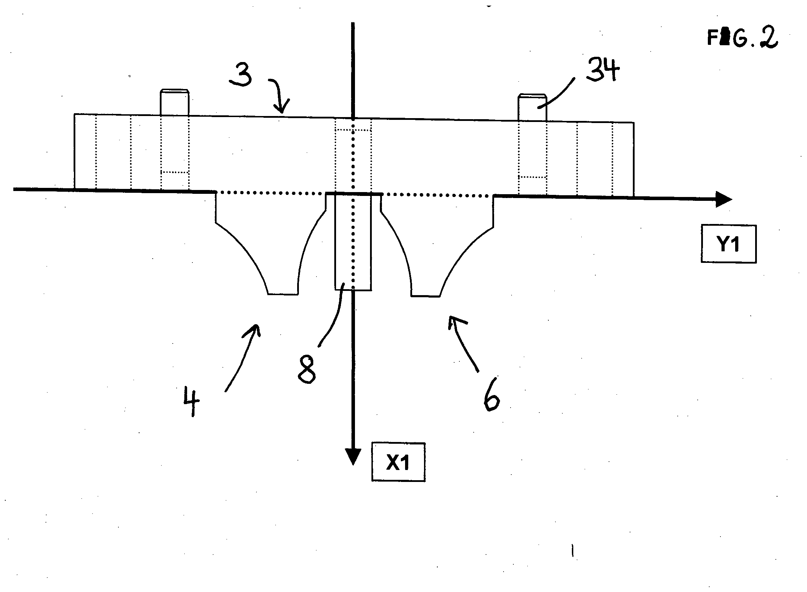

Die in Fig. 1 perspektivisch dargestellte Meßgeometrie 1, die im Folgenden (nach einem Sprachgebrauch im Hause der Anmelderin) auch Prisma genannt wird, weist in diesem Ausführungsbeispiel der Erfindung eine quaderförmige Basis 2 auf, deren in Fig. 2 besser erkennbare Rückseite 3 eben ausgebildet ist. Zur anderen Seite hin sind an dem Prisma 1 zwei Zähne 4, 6 ausgebildet, deren Zahnflanken 4a, 4b und 6a, 6b in diesem Ausführungsbeispiel ein genaues Abbild der in einem Wälzschälverfahren mit dem zu messenden Werkzeug zu bearbeitenden Flanken einer Werkstückverzahnung sind.

Zu Darstellungszwecken läßt sich ein Koordinatensystem für das Prisma 1 definieren, das aus den Achsen X1, Y1 und Z1 besteht. Dabei spannen die Achsen Y1 und Z1 eine zur Ebene der Rückseite 3 parallele Ebene auf, und die Achse X1 steht auf dieser Rückseite senkrecht. Die Achse Z1 verläuft zudem parallel zur Zahnbreitenrichtung der Zähne 4, 6, während die Achse Y1 sowohl senkrecht auf dieser als auch der Zahnhöhenrichtung X1 steht.

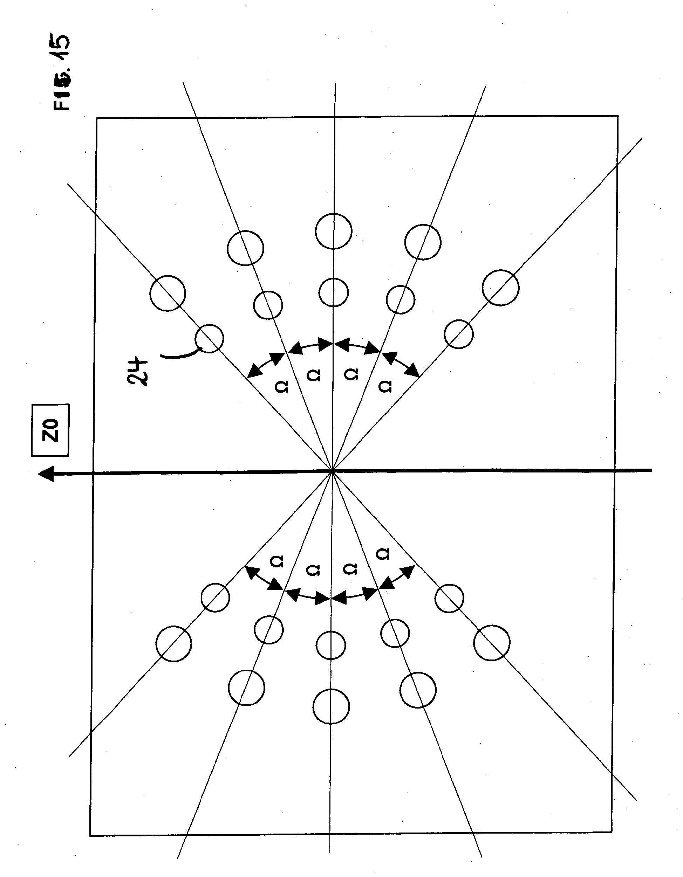

Die Achse X1 verläuft zudem zentral zwischen den Zähnen 4, 6 und wird im Folgenden auch als zentrale Achse des Prismas bezeichnet. Sie definiert zudem den bezüglich der Achse Z1 untersten Punkt eines stiftartigen Positionierelements 8, der sich zentral zwischen den Zähnen 4, 6 in diesem Ausführungsbeispiel senkrecht zu der Rückseite 3 des Prismas 1 erstreckt und weiter unten erläutert wird. Des Weiteren sind Montagebohrungen erkennbar, mit denen das Prisma 1 an einer Meßmaschine befestigbar ist, siehe Figuren 15 - 18.

Es versteht sich, daß zur Beschreibung oder Verwirklichung der Erfindung nicht auf diese spezielle Wahl eines Koordinatensystems zurückzugreifen ist, sondern auch andere Koordinatensystem-Achsen verwendet werden könnten, die nicht einmal zwingend ein rechtwinkliges Dreibein bilden, sondern lediglich linear unabhängig sein müßten.

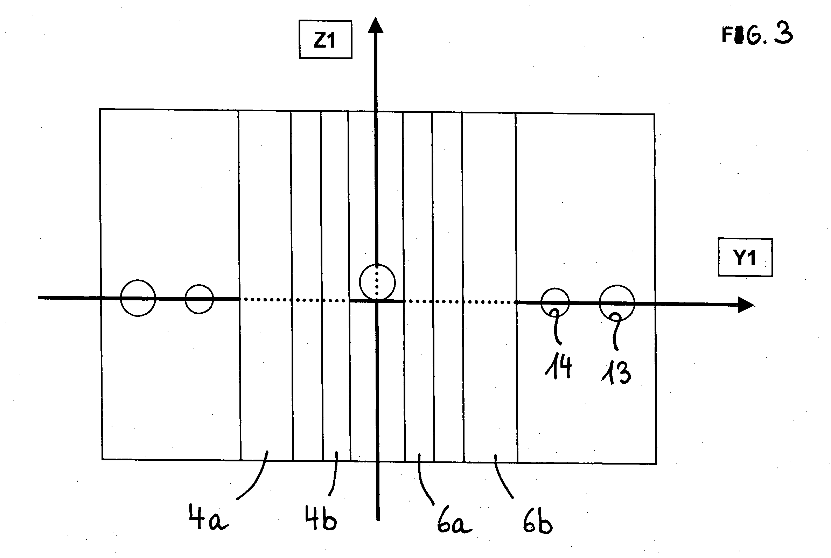

In Fig. 2 ist eine Darstellung des Prismas 1 mit Blickrichtung aus der Z1-Richtung, in Fig. 3 eine Darstellung des Prismas mit Blickrichtung aus der X1-Richtung zu sehen.

Wie eingangs bereits erläutert, sind die Zahnflanken der Zähne 4, 6 ein genaues Abbild der Zahnflanken zweier aufeinanderfolgender Zähne eines innenverzahnten Werkstücks, das durch Wälzschälen mit einem Wälzschälwerkzeug hergestellt werden soll, welches mit dem Prisma 1 vermessen wird. Die vier Zahnflanken des Prismas 1 müßten jedoch nicht zwingend, wie gezeigt, senkrecht zur oberen Stirnseite des Prismas angeordnet sein.

Unter Ausnutzung der gleichen Eingriffsbedingungen des Wälzschälwerkzeugs (Schälrads) mit dem Prisma 1 wie mit dem Werkstück in der profilbildenden Phase, entsprechend dem minimalen Achsabstand zwischen den Rotationsachsen von Werkzeug und Werkstück im Schälverfahren, kann dieser minimale Achsabstand mit Hilfe des Prismas 1 sehr einfach ermittelt werden, wie im Folgenden erläutert wird.

Zunächst kann, wie anhand von Fig. 4 erläutert, der Abstand der Werkstückachse von einer ersten Referenz, die beispielsweise die Rückseite 3 des Prismas 1 sein kann, bestimmt werden. So wird unter Einsatz, z. B. einer Rolle oder Kugel 9, bezüglich der das Werkstück ein bereits bekanntes, oder einfach zu ermittelndes (2 mal die mit A bezeichnete Länge zwischen Kugel 9 und Werkstückachse) Kugelmaß hat, ein Abstand B von der Rückwand 3 zur entfernten Kugelseite gemessen. Bei der Messung von B berührt die Kugel die beiden inneren Zahnflanken 4b, 6a im Bereich der Evolvente. Der gesuchte Abstand C kann dann durch Addition von A und B ermittelt werden. Man erhält also

$$C = A + B,$$

wobei C den Abstand der Rückwand 3 des Prismas 1 zur Werkstückachse bezeichnet, A das bekannte halbe Kugelmaß der Innenverzahnung des Werkstücks und B den gemessenen Abstand zwischen der Rückwand 3 des Prismas 1 und der Kugel 9. Die X1-Achse ist in diesem Fall die Meßachse.

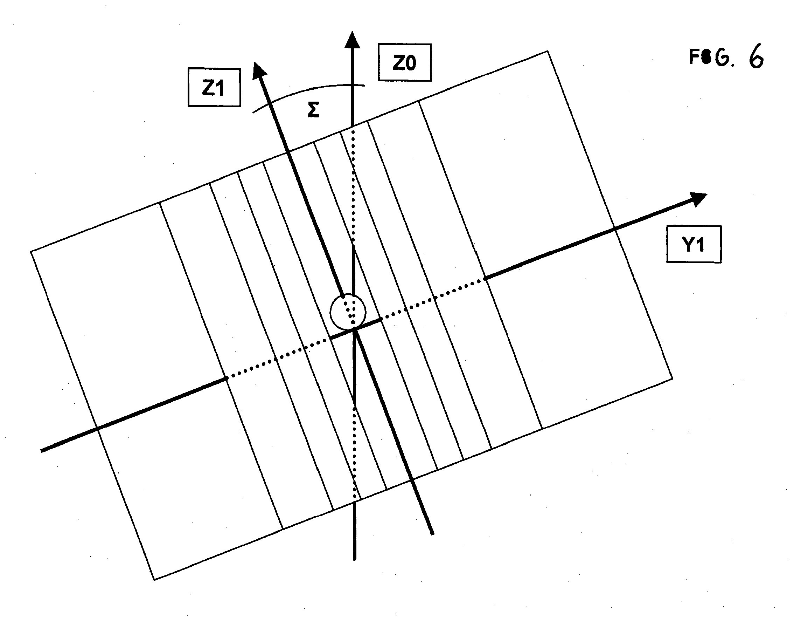

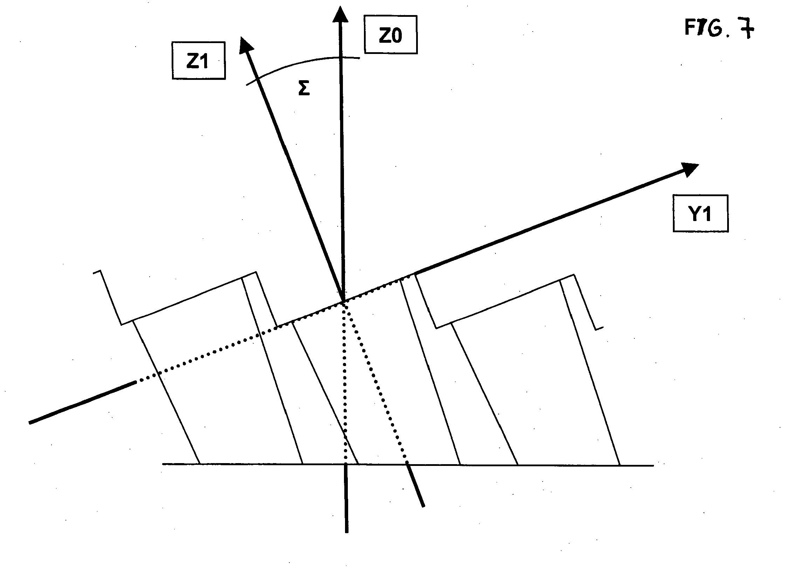

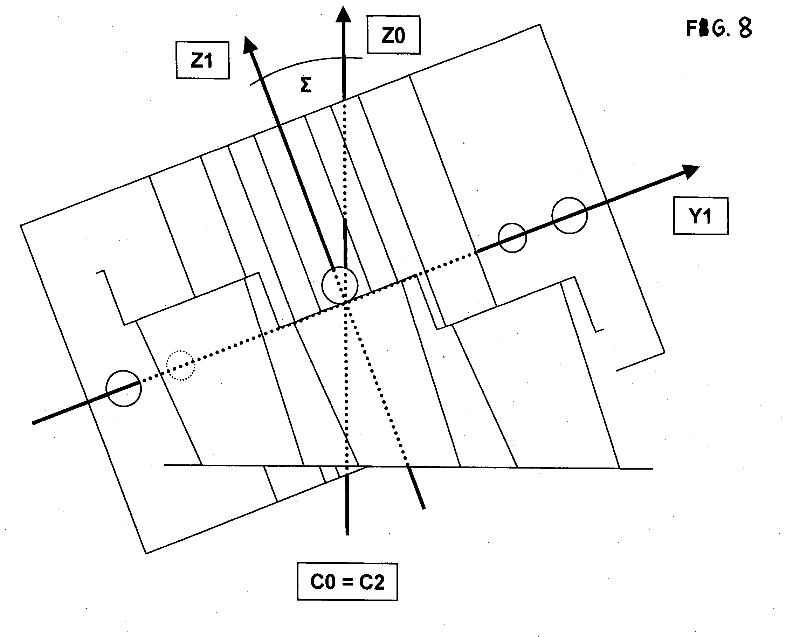

Zur Bestimmung des Abstands D der Werkzeugachse C2 von dieser ersten Referenz, der Rückseite 3, werden die Zahnflanken des Schälrads mit den Zahnflanken 4, 6 des Prismas 1 in Kontakt gebracht, wie anhand der Fig. 6 bis 9 veranschaulicht ist. Die Achse Z1 des Prismas 1 ist dabei gegenüber einer später erläuterten Linearbewegungsachse Z0 der zugehörigen Meßeinrichtung um den Winkel $\Sigma$ verschwenkt, der dem für das Wälzschälverfahren eingestellten Achskreuzwinkel entspricht. Für das Verständnis der Fig. 6 bis 8 sei darauf hingewiesen, daß im gezeigten Ausführungsbeispiel die Werkzeugachse C2 parallel zur Achse Z0 verläuft, so daß der Achskreuzwinkel $\Sigma$ zwischen Werkstückachse und Werkzeugachse und somit die gleichen Eingriffsverhältnisse gewahrt sind.

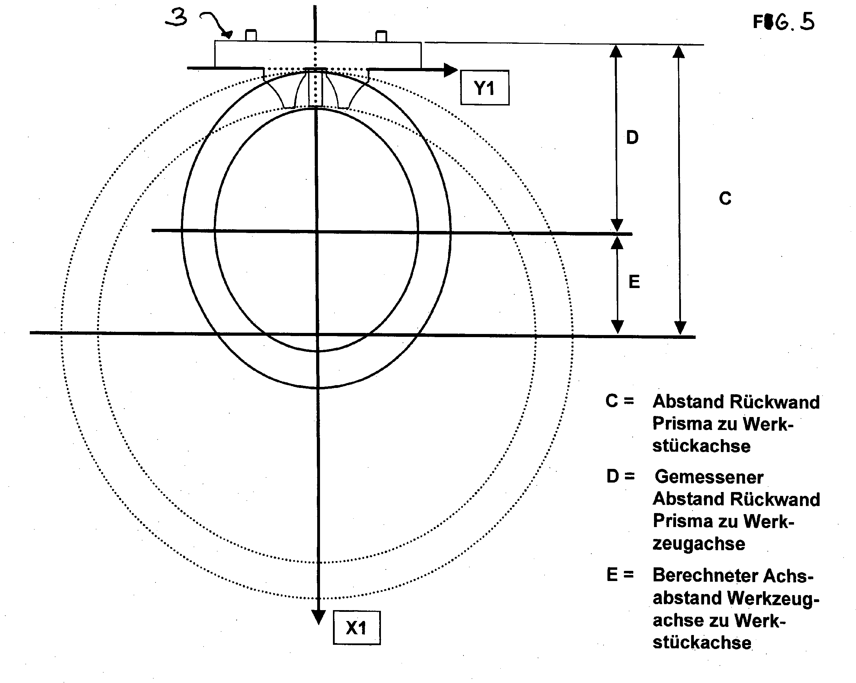

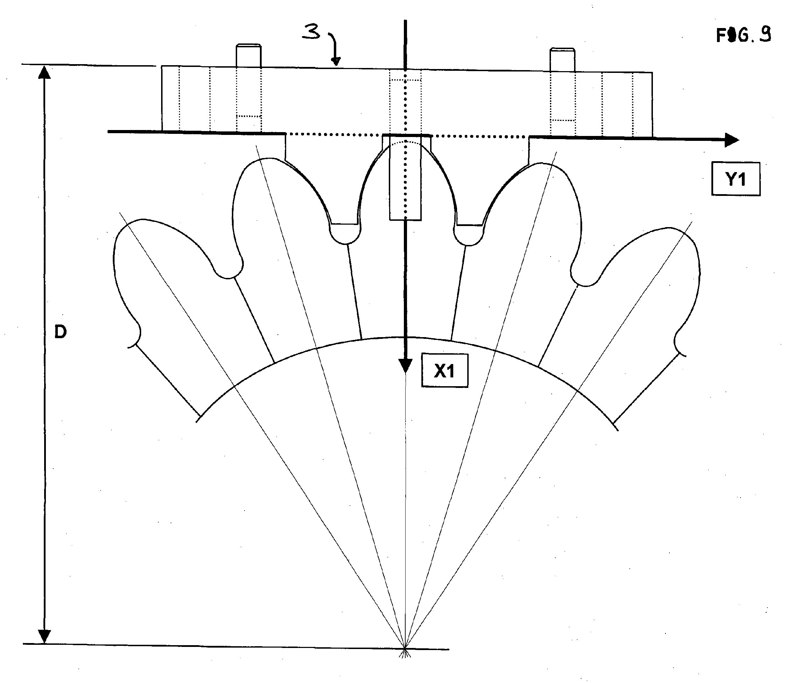

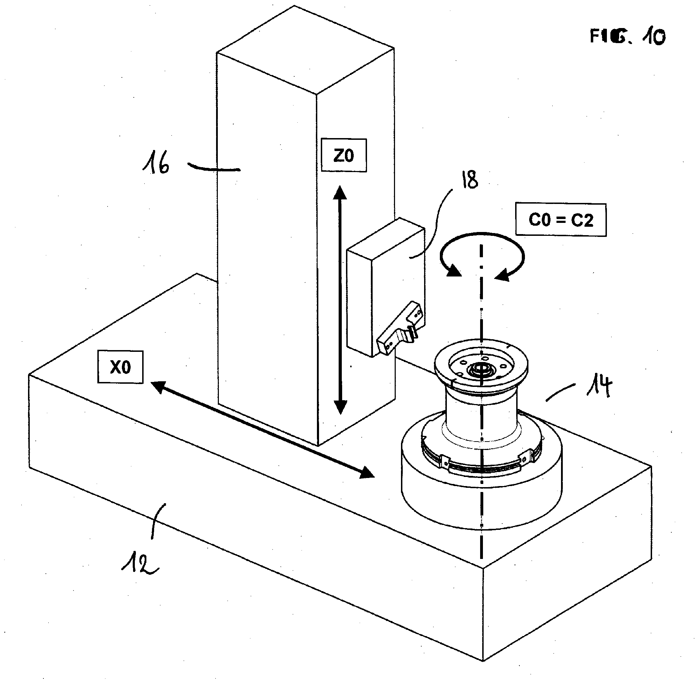

Während die Eingriffsverhältnisse am deutlichsten in Fig. 9 dargestellt sind, veranschaulicht Fig. 5, wie sich aus dem Abstand C zwischen Werkstückachse und Rückwand 3 des Prismas 1 sowie dem gemessenen Abstand D zwischen Werkzeugachse und Rückwand 3 des Prismas 1 durch Differenzbildung der minimale Achsabstand E zwischen Werkzeugachse und Werkstückachse ergibt, wobei wiederum die Achse X1 als Meß- und Berechnungsachse dient (oder die dazu parallele Achse X0 der Meßeinrichtung, siehe Fig. 10).

Des Weiteren ist aus den Darstellungen der Fig. 4 und 5 ohne Weiteres ersichtlich, daß es auf die genaue Lage der ersten Referenz, die in diesem Ausführungsbeispiel die Rückseite 3 des Prismas 1 ist, nicht ankommt, es könnte auch eine andere Referenz herangezogen werden, sofern sie für die Bestimmung der Abstände C und die Messung des Abstands D nur dieselbe ist.

Es gelingt somit, zur Einstellung der Wälzschälmaschine genau den minimalen Achsabstand E zwischen Schälradachse C2 und Werkstückachse C3 auf Grundlage des geeignet mit dem Prisma in Kontakt gebrachten Werkzeugs (Schälrads) heranzuziehen. Dabei kommt es auch nicht auf die genaue Form der Werkstücke und deren Zähne an, beispielsweise können sowohl Werkstücke mit evolventischen Profilen als auch Werkstücke mit anderen Zahnformen behandelt werden.

Die obigen Erläuterungen und Kontaktverhältnisse sind für den Fall beschrieben, daß für die Werkstückbearbeitung mit dem Schälrad auf der Wälzschälmaschine der sich auf dem Außendurchmesser des Schälrads befindliche "Tool Center Point" des Schälrads in der Ebene liegt, die in der radialen Zustellachse der Schälmaschine und der Hubachse der Schälmaschine aufgespannt wird (dabei wird von der üblichen Konfiguration ausgegangen, daß die radiale Zustellachse der Schälmaschine die Tischachse der Schälmaschine schneidet und die Hubachse der Schälmaschine parallel zu deren Tischachse verläuft und die Zustellachse der Schälmaschine schneidet) also einer schälenden Werkstückbearbeitung ohne Seitenversatz.

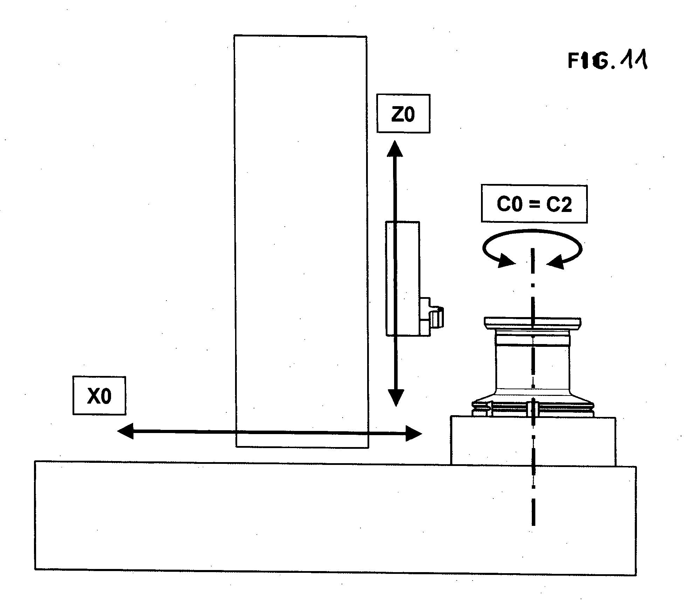

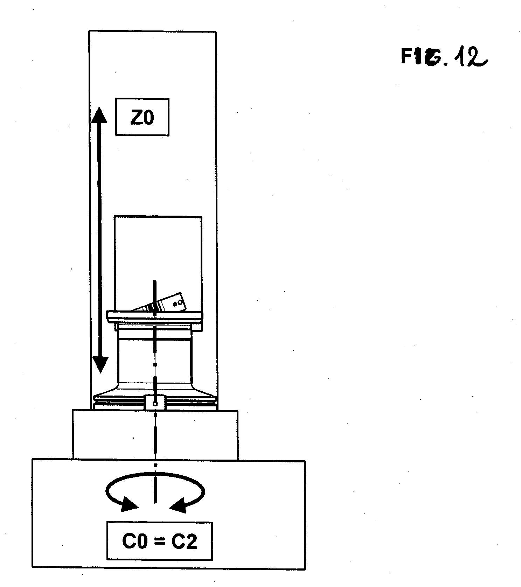

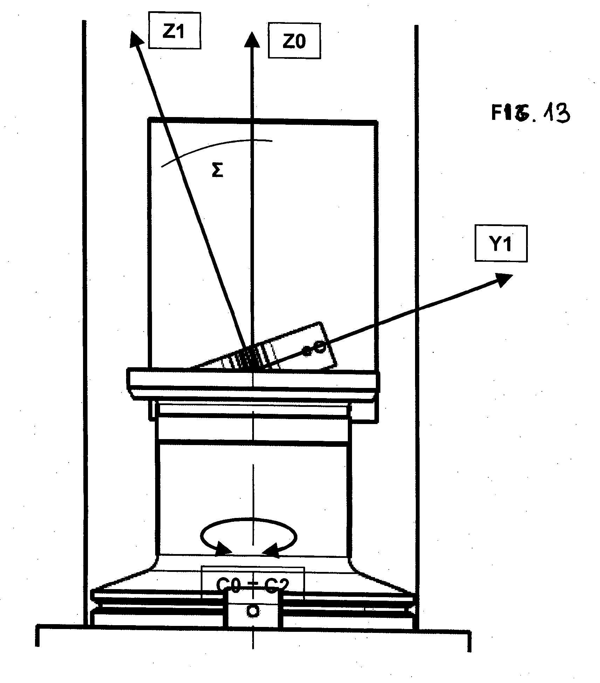

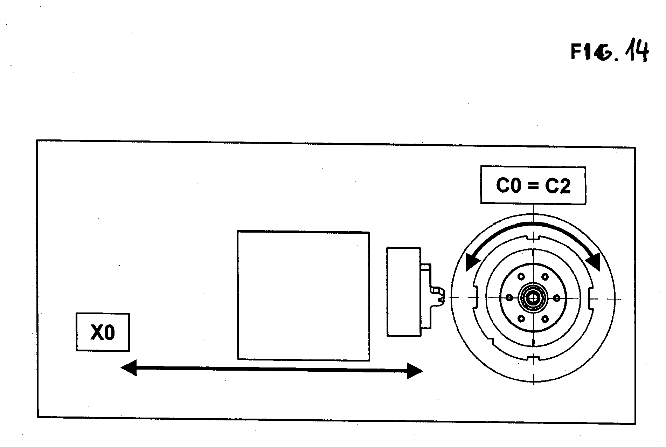

In den Fig. 10 bis 14 ist in mehreren Ansichten eine Meßeinrichtung dargestellt, die auf der oben anhand des Prismas 1 erläuterten Meßgeometrie basiert. Das Ausführungsbeispiel der Meßmaschine verwendet dabei wiederum ein möglichst einfaches System von Bewegungsachsen, auf das die Erfindung jedoch nicht eingeschränkt ist, genauso wenig wie die konkrete Realisierung der Bewegungseinheiten zur Herstellung des Kontakts zwischen Schälrad und Prisma.

Die Meßmaschine 10 weist ein Maschinenbett 12 auf, an dessen nach oben gewandter Seite ein um Achse C0 drehbar gelagerter Tisch 14 angeordnet ist. Auf dem Tisch 14 kann in üblicher Art und Weise ein Wälzschälwerkzeug in Form eines Schälrads über eine Aufspannung aufgespannt werden. Dies wie üblich in einer Art und Weise, daß die Rotationsachse C2 des Schälrads mit der Tischachse C0 übereinstimmt, die hier der Einfachheit halber, aber nicht zwingend notwendig, vertikal auf dem Maschinenbett 12 angeordnet ist. Zudem ist ein Drehgeber vorgesehen, der die Drehlage bezüglich einer vorgegebenen Referenz für eine Drehung um die Achse C0 festlegt. Die Anbringung des Schälrads auf dem Tisch 14 der Meßmaschine erfolgt dabei bevorzugt so, daß die Schneiden des Schälrads nach oben zeigen.

Des Weiteren weist die Meßmaschine 10 einen Ständer 16 auf, der wie in Fig. 10 dargestellt, auf dem Bett horizontal und radial zur Tischachse C0 entlang der Achse X0 verfahrbar ist. Wiederum ist die horizontale Anordnung nicht zwingend, genauso wenig wie die Definition der Achse X0 des Maschinenkoordinatensystems als die Tischachse schneidend. Auf dem verschiebbaren Ständer 16 ist noch ein Hubschlitten 18 angeordnet, der in diesem Ausführungsbeispiel entlang einer vertikalen Achse Z0 entlang des Ständers 16 beweglich ist. Der Hubschlitten 18 trägt das Prisma 1, und zwar in der in Fig. 6 dargestellten Orientierung, in der die Achse Z1 des Prismas 1 mit der Achse Z0 den Achskreuzwinkel $\Sigma$ einschließt, der im Wälzschälverfahren eingestellt wird (bei schälender Bearbeitung ohne Seitenversatz). Des Weiteren sollen der Einfachheit halber die X1-Achse des Prismas 1 parallel zur X0-Achse des Meßgeräts 10 verlaufen und die Tischachse C0 kreuzen.

Für die Messung werden, wie oben bereits erläutert, die Zahnflanken der Zähne 4, 6 des Prismas mit den Zahnflanken des Schälrads in Berührung gebracht. Dabei kann je nach Auslegung des Schälrads und abhängig von der profilbildenden Berührlinie zwischen dem Zahn des Schälrads und der Lücke der Werkstückverzahnung bei einer Messung nur die beiden äußeren Zahnflanken 4a, 6b des Prismas 1, alle vier Zahnflanken 4a, 4b, 6a, 6b des Prismas 1 oder auch nur die beiden inneren Zahnflanken 4b, 6a des Prismas 1 mit den Zahnflanken des Schälrads in Berührung kommen. Des Weiteren ist das Prisma 1 vorzugsweise so gestaltet, daß es nur zu einem Kontakt zwischen den Zahnflanken des Schälrads und des Prismas 1 kommt, aber ein Kontakt des Kopfbereichs und des Fußbereichs des Schälrads mit dem Fußbereich/Kopfbereich des Prismas 1 vermieden wird.

Im Folgenden wird die Rolle des Positionierstiftes 8 erläutert. So erlaubt dieser die Messung einer zusätzlichen Information über die Höhenlage der Schneidkante des Schälrads. Der in diesem Ausführungsbeispiel runde Positionierstift 8 ist so im Prisma 1 positioniert, daß er bei der anhand von Fig. 10 erläuterten Anordnung des Schälrads mit den Schneidkanten nach oben mit seiner Unterseite zur Berührung mit der Schneidkante des Zahnkopfs des Schälrads gelangt. In diesem Ausführungsbeispiel, aber nicht zwingend erforderlich, findet diese Berührung am Außendurchmesser des Schälrads statt. Die zentrale Achse X1 des Prismas kann zudem der Einfachheit halber so gelegt werden, daß die Berührung in der zentralen Achse X1 erfolgt. Demnach befindet sich die Achse des Positionierstifts oberhalb der zentralen Achse X1 des Prismas 1. Während eine parallele Anordnung der Stiftachse sowie der Achse X1 des Prismas der Einfachheit halber bevorzugt wird, ist diese jedoch ebenfalls nicht zwingend erforderlich.

Unter Verwendung der ZO-Achse der Meßmaschine 10 als Meßachse kann nun die Höhe des Schälrads von dem Berührpunkt des Schälrads, der auf der Schneidkante und bevorzugt auch auf dem Außendurchmesser des Schälrads liegt, bezüglich einer schälradseitigen Höhenreferenz gemessen werden. Diese kann beispielsweise die Rückseite des Schälrads sein. Es kann jedoch unter Betrachtung des Verbunds Schälrad - Schälradhalter auch eine Referenz am Schälradhalter, etwa dessen Unterseite sein.

Des Weiteren kann unter Verwendung der Tischachse C0 als Meßachse, insbesondere einfach über den Drehgeber des Tisches, die Winkellage des Auflagepunkts des Positionierstifts auf der Schneidkante (und dem Außendurchmesser) des Schälrads direkt gemessen werden und daraus die azimutale Relativlage dieses Auflagepunkts gegenüber einer Geometrie beispielsweise auf der Rückseite des Schälrads bestimmt werden. Als die dritte azimutale Referenz können, wie oben bereits erläutert, auch andere herangezogen werden, letztlich ist nur darauf zu achten, daß eine ausreichende Information über die Winkellage dahin gehend besteht, daß auf der hergestellten Werkstückverzahnung eine gewünschte Lage dieser Verzahnung gegenüber beispielsweise einer weiteren, bereits vorhandenen Verzahnung am Werkstück besteht.

In diesem Ausführungsbeispiel werden die zwei (ggf. drei) auf diese Weise ermittelten Werte (minimaler Achsabstand, Höhe und ggf. Winkellage) in die Steuerung der Schälmaschine eingegeben. Auf diese Weise wird das Erreichen einer gewissen Zahnweite innerhalb einer vorgegebenen Toleranz erleichtert, sowie das Erreichen einer Qualität der Verzahnung innerhalb vorgegebener Toleranzen und bei Bedarf auch eines genauen Lagebezugs der zu schneidenden Verzahnung zu einer anderen Verzahnung oder Geometrie im Werkstück innerhalb einer vorgegebenen Toleranz.

Im Folgenden wird noch eine Möglichkeit der Montage des Prismas 1 an der Meßeinrichtung 10 beschrieben. Bei den in den Fig. 1, 2, 3, 6, 8 und 9 erkennbaren Montagebohrungen sind die größeren Bohrungen 13 für Schrauben, die kleineren Bohrungen 14 für genaue Paßstifte 34 vorgesehen, mit denen das Prisma 1 genau auf der Halterung des Z0-Schlittens der Meßeinrichtung 10 positioniert wird.

Der Einfachheit halber können die Paßstifte 34 im Prisma eine Achse bilden, die die zentrale Achse X1 des Prismas 1 vertikal schneidet. Bildlich gesprochen liegt der Positionierstift auf dieser Achse auf.

Fig. 15 stellt nun eine Platte dar, die auf dem Z0-Schlitten der Meßeinrichtung 10 angeordnet ist. Sie weist ringförmig angeordnete Paßstiftbohrungen 24 auf, die paarweise auf einer gleichen Achse angeordnet den gleichen Abstand wie die Paßstiftbohrungen 14 im Prisma haben. Die Achsen der jeweiligen Paßstiftbohrungen 24 kreuzen sich in diesem Ausführungsbeispiel im "Null"-Punkt und in der ZO-Achse der Meßeinrichtung. Die Achsen der Paßstiftbohrungen 24 sind dabei untereinander um jeweils einen Winkel $\Omega$ von beispielsweise 10 Grad verdreht. Die Platte ist der Einfachheit halber parallel zur ZO-Achse und senkrecht zur X0-Achse der Meßeinrichtung angeordnet.

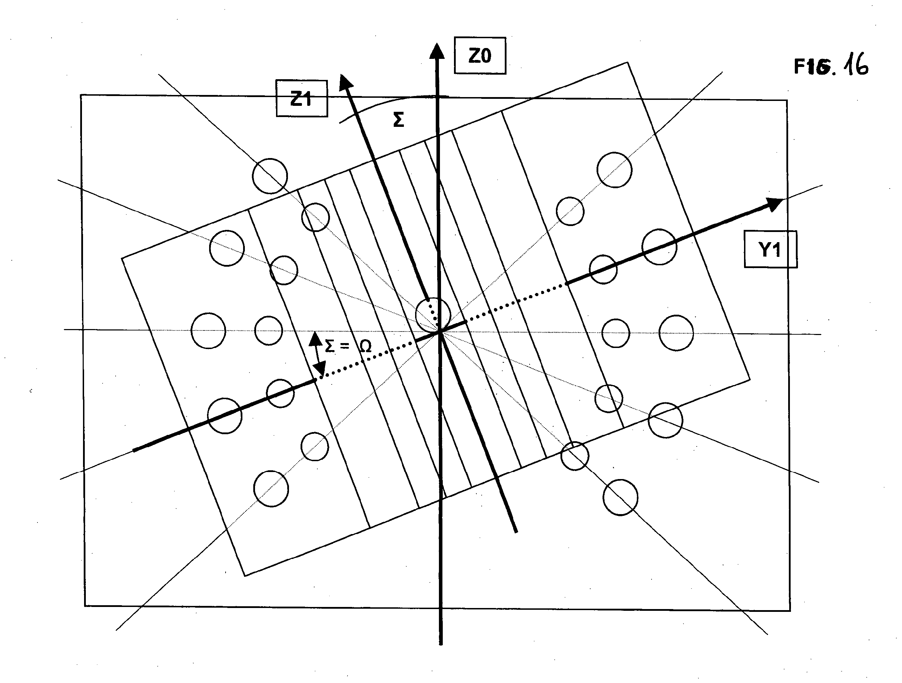

Fig. 16 zeigt ein Prisma, welches auf dieser Platte unter einem Achskreuzwinkel von z. B. 10 Grad befestigt ist. In diesem Fall folgt das Prisma mit dem eingestellten Achskreuzwinkel den vorgegebenen Winkelschritten der Positionen der Paßstiftbohrungen 24 der Platte auf dem Z0-Schlitten. Man erkennt, daß bei dieser Wahl des Koordinatensystems die zentrale Achse des Prismas/der Positionierstift im "Null"-Punkt der Platte zu liegen kommt und daß der Positionierstift die Y1 -Achse (die der Schneide des Werkzeugs entspricht) tangential berührt.

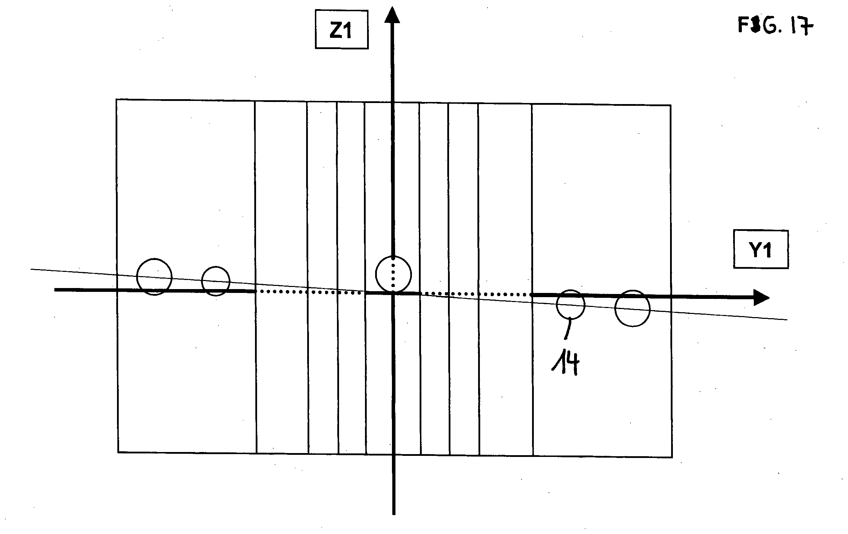

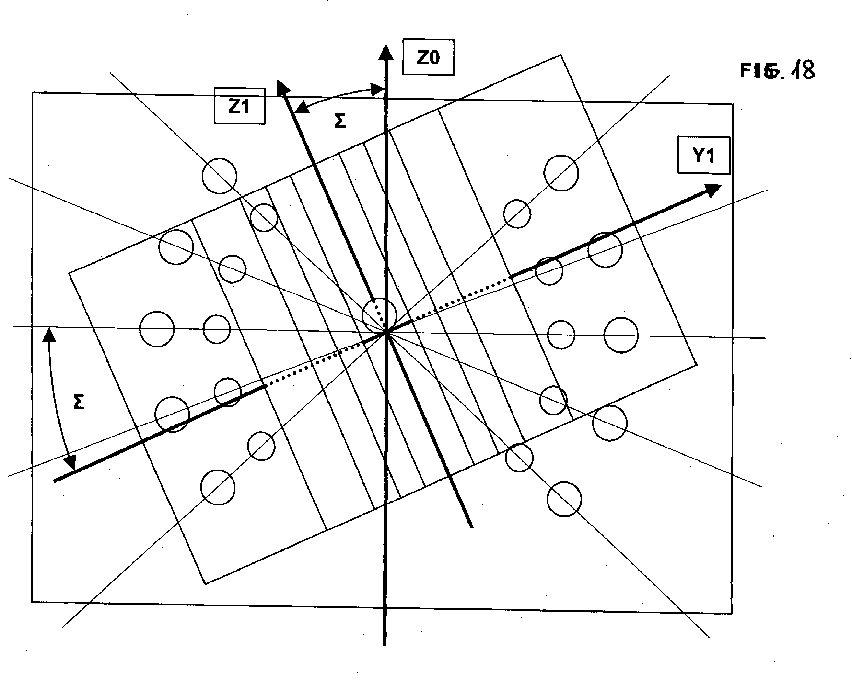

In Fig. 17 ist dagegen ein Prisma dargestellt, bei welchem die Achse durch die Paßstifte 34 gegenüber der Y1-Achse um z. B. 2 Grad geneigt ist. Dies kann sich beispielsweise für den Fall ergeben, daß ein Achskreuzwinkel einzustellen ist, der von 10 bzw. 20 Grad (entsprechend ein- oder zweimal $\Omega$) verschieden ist. Wie in der Montage eines solchen Prismas anhand von Fig. 18 gezeigt, liegt die Achse der Paßstifte des Prismas, d. h. die Achse der Paßstiftbohrungen der Platte der ZO-Achse, nicht mehr auf der Y1-Achse, wodurch sich für dieses Beispiel der größere Achskreuzwinkel von beispielsweise 12 Grad einstellt.

An dieser Stelle ist anzumerken, daß die anhand der in Fig. 15 bis 18 beschriebenen Weise, das Prisma auf einem entlang einer Bewegungsachse beweglichen Schlitten zu montieren, nur eine von mehreren denkbaren Möglichkeiten ist, und insbesondere eine konstruktiv einfache Gestaltung der Meßeinrichtung erlaubt. Allerdings sind jegliche Anordnungen von Bohrungen möglich, auch solche, die gänzlich auf Schrauben verzichten. Beispielsweise könnte das Prisma auch über verschiedene seiner Flächen aufgeklemmt werden. Insbesondere ist eine stufenlose Einstellung eines gewünschten Achskreuzwinkels ebenfalls möglich.

Die Meßeinrichtung kann auch eine stufenlos einstellbare A-Achse (Drehachse) aufweisen; idealerweise wird das Prisma 1 dann mit der zentralen X1-Achse parallel zur A-Achse positioniert, die parallel zur X0-Achse verläuft und die Achse C0 bzw. C2 scheidet.

In einigen Fällen kann aus diversen Gründen das Wälzschälverfahren mit einem Seitenversatz durchgeführt werden. In diesem Fall liegt der sogenannte "Tool Center Point" des Schälrads, der sich auf dem Außendurchmesser des Schälrads befindet, nicht in der Ebene, die von der radialen Zustellachse der Schälmaschine (welche die Tischachse der Schälmaschine schneidet), und der Hubachse der Schälmaschine (welche parallel zur Tischachse C4 der Schälmaschine verläuft und die Zustellachse der Schälmaschine schneidet) aufgespannt wird.

Ein Grund für die Verwendung des Seitenversatzes oder "Offsets" kann in einer Vergrößerung der effektiven Freiwinkel liegen. Damit lassen sich anstelle von konischen Werkzeugen auch zylindrische Werkzeuge einsetzen, die eine längere Lebensdauer bzw. Nachschärflänge aufweisen können und die auch etwas einfacher herzustellen sind. Auch kann ein Seitenversatz dazu dienen, Kollisionen zwischen Schälradhalter/Schälrad und Werkstück oder dessen Aufspannung zu vermeiden.

Auch in diesem Fall besteht die Möglichkeit, daß die Zahnflanken des Prismas weiterhin ein genaues Abbild der zu bearbeitenden Flanken der Verzahnung darstellen. Die Lage der Verzahnungsflanken auf der Meßmaschine ändert sich dann im Einklang mit dem "beizubehaltenden" Verzahnungseingriff. Der zwischen der Z1-Achse des Prismas 1 und der ZO-Achse der Meßeinrichtung entspricht dann nicht mehr dem Achskreuzwinkel $\Sigma$, den das Schälrad in der Bearbeitung des Werkstücks auf der Schälradmaschine einnimmt. Vielmehr erfolgt eine Neuberechnung des Winkels zwischen der Z1-Achse des Prismas 1 und der ZO-Achse der Meßmaschine 10 und eine entsprechende Lageeinstellung des Prismas 1 auf der Meßmaschine 10. Zudem sind die Flankenlinien der Flanken des Prismas gegenüber der Rückwand um einen von der Größe des Seitenversatzes abhängigen Winkel zu neigen (alternativ das gesamte Prisma um die Y1-Achse zu kippen, unter Aufgabe der Parallelität von Z0-Richtung und der Erstreckung der Rückseite 3; dazu kann an der Meßmaschine eine zu Y1 parallele Neigungsachse Y0 als Drehachse realisiert werden). Ähnliches gilt für den Fall eines zusätzlichen Neigungswinkels der Schälradebene gegenüber der orthogonal zur Werkstückachse verlaufenden Ebene im Wälzschälverfahren, wie beispielsweise auch in EP 2 537 615 beschrieben. Die dazu erforderlichen Rechnungen sind dem Fachmann aufgrund der Berechnungen, die er zur Auslegung eines Schälrads in Abhängigkeit eines gewünschten Seitenversatzes beim Wälzschälverfahren heranzieht, bekannt. Für Stoßräder vereinfachen sich diese Betrachtungen aufgrund eines Achskreuzwinkels Null.

Im Übrigen kann das oben beschriebene Verfahren auch dann zur Bestimmung der exakten Höhe des Schälrads oder dessen Verbunds mit dem Schälradhalter oder auch der Winkellage der Zähne zu der dritten Referenz eingesetzt werden, wenn es hinsichtlich der Zahnweite ausreicht, den Außendurchmesser des Schälrads in bekannter Weise als Ausgangswert zur Verfügung zu stellen. Dies ist insbesondere dann ausreichend, wenn es in der Anwendung hauptsächlich auf die Einhaltung eines genauen Fußkreisdurchmessers ankommt, wie bei manchen Steckverzahnungen, und weniger auf die Einhaltung einer genauen Zahnweite, in welchem Fall der herkömmlich zur Verfügung gestellte Außendurchmesser des Schälrads ohnehin über den in der Schälmaschine einzustellenden Achsabstand dominiert.

**Patentansprüche**

1.  Messgeometrie (1) für ein verzahntes, zur wälzenden Bearbeitung, insbesondere zum Wälzschälen von Werkstückverzahnungen ausgelegtes Werkzeug mit geometrisch bestimmten Schneiden zur Bestimmung wenigstens einer Messgröße, welche für einen mit dem Werkzeug durchzuführenden Bearbeitungsprozess, insbesondere Schälprozess verwendbar ist, in einer Phase dessen das Profil der zu erzeugenden Werkstückverzahnung in Verzahnungseingriff mit der Werkzeugverzahnung gebildet wird, aufweisend einen Verzahnungsbereich (4, 6), mit welchem die Werkzeugverzahnung bei Bestimmung der Messgröße in einem dem Verzahnungseingriff zwischen Werkzeug und Werkstück in der profilbildenden Phase entsprechenden Verzahnungseingriff steht,
    **gekennzeichnet durch** ein an der Seite des Verzahnungsbereichs mit Erstreckungskomponente in Zahnhöhenrichtung (X1) vorragendes, insbesondere stiftartiges Positionierelement (8), das zur Anlage an der Schneidkante des Zahnkopfes des Werkzeugs, insbesondere an dessen Außendurchmesser, vorgesehen ist.

2.  Messgeometrie nach Anspruch 1, bei dem der Verzahnungsbereich der Messgeometrie wenigstens einen Abschnitt der Zahnflanken der Werkstückverzahnung abbildet.

3.  Messgeometrie nach Anspruch 2, bei der die wenigstens abschnittsweise Abbildung zwei einander zugewandter, zu einer Lücke gehörigen Zahnflanken (4b, 6a) und/oder zwei voneinander abgewandte Zahnflanken (4a, 6b) insbesondere benachbarter Zähne umfasst, insbesondere die vier Zahnflanken zweier aufeinanderfolgender Zähne (4, 6), vorzugsweise jedoch nicht alle, insbesondere nicht mehr als vier Zahnflanken umfasst.

4.  Messeinrichtung (10) mit einer Halterung für ein wälzend arbeitendes Werkzeug mit geometrisch bestimmten Schneiden, insbesondere Schälrad, und einer Messgeometrie (1) nach einem der Ansprüche 1 bis 3, deren relative räumliche Lage gegenüber der Halterung veränderbar ist.

5.  Messeinrichtung nach Anspruch 4, bei der die Halterung um eine Drehachse (C0) drehbar gelagert ist und insbesondere das Werkzeug so hält, dass dessen Rotationsachse (C2) mit der Drehachse zusammenfällt, wobei insbesondere ein Drehgeber zur Feststellung der Drehlage des Werkzeugs bei dessen Verzahnungseingriff mit der Messgeometrie vorgesehen ist.

6.  Messeinrichtung nach Anspruch 4 oder 5, bei der der radiale Abstand zwischen Werkzeug und Messgeometrie änderbar ist, wodurch der Verzahnungseingriff zwischen ihnen hergestellt werden kann, insbesondere entlang einer ersten Linearbewegungsachse (X0), und/oder bei der die Höhenlage der Messgeometrie bezüglich der Werkzeugachse änderbar ist, wodurch insbesondere das Positionierelement (8) zur Anlage gebracht werden kann, bevorzugt entlang einer zweiten Linearbewegungsachse (Z0), die insbesondere parallel zur Drehachse (C0) verläuft.

7.  Messeinrichtung nach einem der Ansprüche 4 bis 6 mit einer Steuereinrichtung, die eine Information über die Relativlage zwischen Werkzeug und Messgeometrie ermittelt und/oder abspeichert, insbesondere anhand der ersten Linearbewegungsachse (X0), der zweiten Linearbewegungsachse (Z0) und/oder der Drehachse (C0).

8.  Messeinrichtung nach einem der Ansprüche 4 bis 7, bei der die Halterung abnehmbar und zusammen mit dem gehaltenen Werkzeug auf eine Verzahnungsmaschine, insbesondere Wälzschälmaschine aufbringbar ist.

9.  Messverfahren für ein verzahntes, zum wälzenden Bearbeiten, insbesondere Wälzschälen von Werkstückverzahnungen ausgelegtes Werkzeug mit geometrisch bestimmten Schneiden, bei dem wenigstens eine Messgröße bestimmt wird, welche für einen mit dem Werkzeug durchzuführenden Arbeitsprozess, insbesondere Schälprozess verwendbar ist, wobei in einer Phase des Prozesses das Profil der zu erzeugenden Werkstückverzahnung in Verzahnungseingriff mit der Werkzeugverzahnung gebildet wird, wobei die Bestimmung der Messgröße unter einem dem Verzahnungseingriff zwischen Werkzeug und Werkstück in der profilbildenden Phase entsprechenden Verzahnungseingriff des Werkzeugs mit einer einen Verzahnungsbereich aufweisenden Messgeometrie erfolgt,

**dadurch gekennzeichnet, dass** das Messverfahren mit einer Messgeometrie nach einem der Ansprüche 1 bis 3 und insbesondere einer Messeinrichtung nach einem der Ansprüche 4 bis 8 durchgeführt wird.

10. Messverfahren nach Anspruch 9, bei dem eine Messgröße eine Information über den Abstand (D) zwischen der Rotationsachse (C2) des Werkzeugs und einer ersten, messgeometrieseitigen Referenz beinhaltet, wobei die erste Referenz beispielsweise die bevorzugt planar ausgebildete Rückseite (3) einer Basis der Messgeometrie ist.

11. Messverfahren nach Anspruch 9 oder 10, bei dem eine Messgröße eine Information über den Höhenabstand zwischen der Anlage des Positionierelements und einer zweiten, werkzeugseitigen Referenz beinhaltet, beispielsweise der Rückseite des Werkzeugs oder der einer das Werkzeug aufnehmenden Halterung, und/oder bei der eine Messgröße eine Information über die Winkellage der Anlage des Positionierelements und einer dritten, werkzeug- oder werkzeughalterseitigen azimutalen Referenz beinhaltet, beispielsweise einer drehsymmetriebrechenden Geometrie des Werkzeugs oder der Halterung, wie etwa eine Nut oder ein Passstift.

12. Verfahren zur wälzenden Bearbeitung von Verzahnungen, insbesondere Wälzschälverfahren, bei dem zunächst mit einem Messverfahren nach einem der Ansprüche 9 bis 11 eine Messinformation bestimmt wird und die Bearbeitung dann unter einem von der so bestimmten Messinformation abhängigen Steuerbefehl durchgeführt wird.

13. Anlage mit einer Messeinrichtung (10) nach einem der Ansprüche 4 bis 8 und einer Verzahnungsmaschine, insbesondere Wälzschälmaschine mit einer Steuerung, die dazu gesteuert ist, eine mit einem Messverfahren nach einem der Ansprüche 9 bis 11 bestimmte Messgröße von der Messeinrichtung zu erhalten und die Maschine zur Durchführung eines wälzenden Bearbeitungsverfahrens, insbesondere Wälzschälverfahrens in Abhängigkeit wenigstens einer so erhaltenen Messgröße steuert.

14. Anlage nach Anspruch 13, bei der die Werkzeughalterung zwischen Messeinrichtung und Verzahnungsmaschine austauschbar ist und die insbesondere die Steuerungen der Messeinrichtung und der Maschine koppelt oder vereint.

**Claims**

1. A measuring geometry (1) for a toothed tool with geometrically defined cutting edges configured for machining through a rolling engagement, in particular power skiving, of teeth on a workpiece, said measing geometry being designed for determining at least one measured variable which can be used for a machining process to be carried out by the tool, in particular a skiving process, wherein during a phase of said machining process the toothed profile to be generated on the workpiece is formed in a meshing engagement with the teeth of the tool, said measuring geometry having a toothed section (4, 6) with which, for determining the measured variable, the teeth of the tool are brought into a meshing engagement that is representative of the engagement between the teeth of the tool and workpiece during the profile-forming phase, **characterised by** an in particular post-like positioning element (8) protruding on the side of the toothed section with its main dimension oriented in the direction (XI) of the tooth height, said positioning element being designed to make contact with the cutting edge of the tooth tip of the tool, in particular at its outside diameter.

2. The measuring geometry according to claim 1, wherein the toothed section of the measuring geometry reproduces at least a section of the tooth flanks of the workpiece teeth.

3. The measuring geometry according to claim 2, wherein the reproduction comprises at least two tooth flanks (4b, 6a) that face each other across a gap, and/or two tooth flanks (4a, 6b) that face away from each other and belong in particular to neighbouring teeth, and comprises in particular the four tooth flanks of two consecutive teeth (4, 6), but preferably not all teeth flanks, and in particular no more than four tooth flanks.

4. A measuring device (10) comprising a holding device for a tool with geometrically defined cutting edges for machining a workpiece through a rolling engagement, in particular a skiving wheel, and a measuring geometry (1) according to one of claims 1 to 3, wherein the spatial relationship between the measuring geometry and the holding device is variable.

5. The measuring device according to claim 4, wherein the holding device is mounted so as to be rotatable around a rotary axis (CO) and in particular holds the tool so that the axis of rotation (C2) of the tool coincides with the rotary axis, wherein in particular a rotary encoder is arranged for determining the rotational position of the tool when the teeth of the latter are in a meshing engagement with the measuring geometry.

6. The measuring device according to claim 4 or 5, wherein the radial distance between the tool and measuring geometry is modifiable, allowing the meshing engagement to be created therebetween, in particular along a first axis of linear movement (XO), and/or wherein the height position of the measuring geometry relative to the tool axis is modifiable, whereby in particular the positioning element (8) can be brought into contact with the tool, preferably along a second axis of linear movement (ZO) which in particular runs parallel to the rotary axis (C0).

7. The measuring device according to one of claims 4 to 6, comprising a controller device which acquires and/or stores information concerning the relative position between the tool and measuring geometry, in particular based on the first axis of linear movement (X0), the second axis of linear movement (ZO) and/or the rotary axis (CO).

8. The measuring device according to one of claims 4 to 7, wherein the holding device is removably installed, together with the tool held by the holding device, on a gear cutting machine, in particular a power skiving machine.

9. A measurement method for a toothed tool, which is configured for machining through a rolling engagement, in particular power skiving, of teeth on a workpiece, said tool having geometrically defined cutting edges, wherein at least one measured variable is determined, which variable can be used for a machining process to be carried out by the tool, in particular a skiving process, wherein during a phase of said machining process the toothed profile to be generated on the workpiece is formed in a meshing engagement with the teeth of the tool, and wherein the measured variable is determined by means of a meshing engagement of the teeth of the tool with a measuring geometry having a toothed section, said meshing engagement corresponding to the meshing engagement between the tool and workpiece during the profile-forming phase,
**characterised in that** the measurement method is performed using a measuring geometry according to one of claims 1 to 3 and in particular using a measuring device according to one of claims 4 to 8.

10. The measurement method according to claim 9, wherein a measured variable contains information concerning the distance (D) between the axis of rotation (C2) of the tool and a first reference that is associated with the measuring geometry, wherein the first reference is, for example, the preferably planar rear side (3) of a base of the measuring geometry.

11. The measurement method according to claim 9 or 10, wherein a measured variable contains information concerning the height difference between the contact point of the positioning element and a second reference associated with the tool, for example the rear side of the tool or a holder receiving the tool, and/or wherein a measured variable contains information concerning the angular position of the point of contact of the positioning element and of a third azimuthal reference associated with the tool or tool holder, for example a tool or holding device geometry which breaks the rotational symmetry, such as a groove or a dowel pin.

12. A method for the machining of teeth through a rolling engagement, in particular a power skiving method, wherein measurement information is first determined using a measurement method according to one of claims 9 to 11 and machining is then performed by means of a control command that is dependent on the measurement information thus determined.

13. An installation with a measuring device (10) according to one of claims 4 to 8 and a gear cutting machine, in particular a power skiving machine with a controller which is controlled so as to receive, from the measuring device, a measured variable determined by means of a measurement method according to one of claims 9 to 11 and which controls the machine for performing a machining method involving a rolling engagement, in particular a power skiving method, based on at least one measured variable thus obtained.

14. The installation according to claim 13, wherein the tool holding device is interchangeable between the measuring device and gear cutting machine and in particular connects or joins the controllers of the measuring device and gear cutting machine.

**Revendications**

1. Géométrie de mesure (1) pour un outil denté destiné à l'usinage par roulement, notamment au décolletage en développante, de dentures sur une pièce et doté d'arêtes de géométrie précise, ladite géométrie de mesure permettant de déterminer au moins une grandeur de mesure pouvant être exploitée dans le cadre d'un processus d'usinage réalisé avec ledit outil, notamment un processus de décolletage, lors d'une phase duquel le profil de la denture de pièce à réaliser est formé par engrènement avec la denture de l'outil, ladite géométrie de mesure présentant une zone de denture (4, 6) avec laquelle la denture de l'outil, lors de la détermination de la grandeur de mesure, se trouve engrenée d'une manière correspondant à l'engrènement entre l'outil et la pièce existant lors de la phase de formation de profil, **caractérisée par** un élément de positionnement (8), notamment en forme de tige, qui ressort sur le côté de la zone de denture avec une composante directionnelle dans le sens de la hauteur des dents (X1), lequel élément de positionnement est prévu pour venir en appui sur le tranchant de la tête de dent de l'outil, notamment sur son diamètre extérieur.

2. Géométrie de mesure selon la revendication 1, dans laquelle la zone de denture de la géométrie de mesure reproduit au moins une partie des flancs de dent de la denture de la pièce.

3. Géométrie de mesure selon la revendication 2, dans laquelle la reproduction au moins partielle comprend deux flancs de dent (4b, 6a) en vis-à-vis appartenant à un filet et/ou deux flancs de dent (4a, 6b) détournés l'un de l'autre, notamment appartenant à des dents voisines, et comprend notamment les quatre flancs de dent de deux dents successives (4, 6), de préférence toutefois pas toutes les dents, notamment pas plus de quatre flancs de dent.

4. Dispositif de mesure (10) comportant une monture destinée à un outil à roulement doté d'arêtes de géométrie précise, notamment à une roue de décolletage, ainsi qu'une géométrie de mesure (1) selon l'une des revendications 1 à 3 dont la position spatiale relative par rapport à la monture est variable.

5. Dispositif de mesure selon la revendication 4, dans lequel la monture est supportée rotative sur un axe de pivotement (C0) et retient notamment l'outil de telle manière que son axe de rotation (C2) coïncide avec l'axe de pivotement, un capteur rotatif étant notamment prévu pour établir la position de rotation de l'outil lors de son engrènement avec la géométrie de mesure.

6. Dispositif de mesure selon la revendication 4 ou 5, dans lequel la distance radiale entre l'outil et la géométrie de mesure est modifiable, ce qui permet de produire l'engrènement entre eux, notamment le long d'un premier axe de déplacement linéaire (X0), et/ou dans lequel la position en hauteur de la géométrie de mesure par rapport à l'axe de l'outil est modifiable, ce qui permet notamment d'amener l'élément de positionnement (8) en appui, de préférence le long d'un deuxième axe de déplacement linéaire (ZO) qui est notamment parallèle à l'axe de pivotement (C0).

7. Dispositif de mesure selon l'une des revendications 4 à 6, comportant un système de commande qui détermine et/ou stocke une information concernant la position relative entre l'outil et la géométrie de mesure, notamment au moyen du premier axe de déplacement linéaire (X0), du deuxième axe de déplacement linéaire (ZO) et/ou de l'axe de pivotement (C0).

8. Dispositif de mesure selon l'une des revendications 4 à 7, dans lequel la monture est amovible et peut être montée, conjointement à l'outil qu'elle retient, sur une machine à tailler les dentures, notamment une machine de décolletage en développante.

9. Procédé de mesure pour un outil denté destiné à l'usinage par roulement, notamment au décolletage en développante, de dentures sur une pièce et doté d'arêtes de géométrie précise, dans lequel est déterminée au moins une grandeur de mesure qui peut être exploitée dans le cadre d'un processus d'usinage réalisé avec ledit outil, notamment un processus de décolletage, lors d'une phase duquel procédé le profil de la denture de pièce à réaliser est formé par engrènement avec la denture de l'outil, ladite détermination de la grandeur de mesure s'effectuant au cours d'un engrènement d'une géométrie de mesure présentant une zone de denture et de l'outil correspondant à l'engrènement existant pendant la phase de formation de profil entre l'outil et la pièce, **caractérisé en ce que** le procédé de mesure est mis en œuvre avec une géométrie de mesure selon l'une des revendications 1 à 3 et notamment avec un dispositif de mesure selon l'une des revendications 4 à 8.

10. Procédé de mesure selon la revendication 9, dans lequel une grandeur de mesure contient une information concernant l'écart (D) entre l'axe de rotation (C2) de l'outil et une première référence propre à la géométrie de mesure, ladite première référence étant par exemple le revers (3) de préférence plan d'une base de la géométrie de mesure.

11. Procédé de mesure selon la revendication 9 ou 10, dans lequel une grandeur de mesure contient une information concernant l'écart en hauteur entre le point d'appui de l'élément de positionnement et une deuxième référence propre à l'outil, par exemple le revers de l'outil ou une monture dans laquelle est reçu ledit outil, et/ou dans lequel une grandeur de mesure contient une information concernant la position angulaire du point de contact de l'élément de positionnement et d'une troisième référence azimutale propre à l'outil ou à la monture pour outil, par exemple une géométrie de l'outil ou de la monture qui en interrompt la symétrie en rotation, telle qu'une rainure ou une goupille.

12. Procédé d'usinage de dentures par roulement, notamment procédé de décolletage en développante, dans lequel tout d'abord il est déterminé une information de mesure au moyen d'un procédé de mesure selon l'une des revendications 9 à 11 puis l'usinage est effectué sous une instruction de commande qui est fonction de ladite information de mesure ainsi déterminée.

13. Installation comportant un dispositif de mesure (10) selon l'une des revendications 4 à 8 et une machine à tailler les dentures, notamment une machine de décolletage en développante présentant un dispositif de commande commandé de façon à obtenir, en provenance du dispositif de mesure, une grandeur de mesure déterminée au moyen d'un procédé de mesure selon l'une des revendications 9 à 11, et qui commande la machine de façon qu'elle effectue un procédé d'usinage par roulement, notamment un procédé de décolletage en développante, en fonction d'au moins une grandeur de mesure ainsi obtenue.

14. Installation selon la revendication 13, dans laquelle la monture d'outil est interchangeable entre le dispositif de mesure et la machine à tailler les dentures et couple ou unit notamment les dispositifs de commande du dispositif de mesure et de la machine.

FIG. 1

FIG.2

EP 3 043 947 B1

FIG. 3

Z1

Y1

4a    4b    6a    6b

14    13

EP 3 043 947 B1

FIG. 4

3

Y1

B

C

A

9

X1

A = Bekanntes halbes
Kugelmaß der
Innenverzahnung

B = Gemessener
Abstand Rückwand
Prisma zu Kugel

C = Abstand Rückwand
Prisma zu Werkstückachse

FIG. 5

C = Abstand Rückwand
Prisma zu Werkstückachse

D = Gemessener
Abstand Rückwand
Prisma zu Werkzeugachse

E = Berechneter Achsabstand Werkzeugachse zu Werkstückachse

EP 3 043 947 B1

FIG. 6

FIG. 7

FIG. 8

FIG. 9

3

Y1

X1

D

EP 3 043 947 B1

FIG. 10

FIG. 11

Z0

C0 = C2

X0

EP 3 043 947 B1

FIG. 12

Z0

C0 = C2

Fig. 13

EP 3 043 947 B1

FIG. 14

C0 = C2

X0

FIG. 15

FIG. 16

EP 3 043 947 B1

FIG. 17

Z1

Y1

14

EP 3 043 947 B1

30

FI**Ϭ**.18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2537615 A1
- JP H07102483 B

- EP 2537615 A